# EUROPEAN PATENT SPECIFICATION

(11) **EP 4 284 666 B1**
(45) Date of publication and mention of the grant of the patent: **28.10.2026**
(21) Application number: 21923494.5
(22) Date of filing: 18.11.2021
(51) Int. Cl.: B60J 1/14, B60J 7/00, B60J 7/10, B60J 7/19, B62D 33/02, B62D 33/027, E05D 7/10

(54) **AUTOMOBILE PICKUP BED ROOF**
DACH FÜR EIN FAHRZEUG-AUFNAHMEBETT
TOIT D'AUTOMOBILE POUR PLANCHER DE CAISSE DE CAMIONNETTE

(30) Priority: 29.01.2021 TH 2101000526
(43) Date of publication of application: 06.12.2023
(73) Proprietor: Vandapac Co., Ltd., Chonburi 20000 (TH)
(72) Inventor: TANGITVET, Varawong, Bangkok, 10110 (TH)
(74) Representative: Watermeyer, Nicholas
(86) International application number: PCT/TH2021/000069
(87) International publication number: WO 2022/164396

(56) References cited:
- CN-A- 110 753 635
- CN-U- 204 340 843
- CN-U- 206 826 378
- CN-U- 210 822 004
- JP-U- S5 642 417
- US-A1- 2018 118 007
- US-A1- 2019 291 554
- US-A1- 2019 291 554
- US-A1- 2020 148 046
- US-B1- 10 046 628

## Description

### FIELD OF THE INVENTION

Engineering related to an automobile pickup bed roof

### BACKGROUND OF THE INVENTION

Recently pick-up truck type automobiles are widely used, both in transporting goods and as personal automobiles, which carry personal belongings in the pickup bed. However, due to weather and dust on the roads which can damage goods and personal belongings contained in the pickup bed, there is an introduction of a roof to be installed on the automobile's pickup bed. Typically, the automobile pickup bed roof installed to the automobile pick up bed is provided with a roof fixing unit, enabling the automobile pickup bed roof to be attached to the automobile pick up bed. Furthermore, the automobile pickup bed roof has a passenger entrance, an air ventilation, and water drainage, making the automobile pickup bed roof preferential.

Conventionally, in order to install the roof to a automobile pick up bed securely by a conventional roof fixing unit, one has to fasten a clamping arm to an upper edge fixing panel. Thus, installing of the conventional pickup bed fixing unit has to be done in piece-by-piece manner, and it is difficult to tighten and align these pieces into their proper positions. An example of a known fixing structure for a compartment cover for an automobile pick up bed is disclosed in CN 204 340 843 U.

A conventional hinge is composed of two panels connected to each other and has a connecting part as a pivoting point. The connection of the hinge with two panels connected together makes it difficult to dissemble, or even impossible to separate them apart. This makes it difficult to install or replace a window and a door panel when needed.

A conventional open-close device is used for installing a window to an automobile. The window is a sliding panel type which can be slid in order to open/close the window. However, when the automobile is travelling in a high speed, a resulted wind pushes the window to close. Furthermore, at the front window panel, vibration from the automobile's engine can make the window slide by itself. Also, in another conventional open-close device which comprise a shock absorber bar for pushing/pulling a window panel open or close, respectively. However, after being used for a period of times, the shock absorber bar will deteriorate and loss it strength so that it cannot keep the window panel open. In another conventional window open/close device, a window hinge with a spring loaded is used for open-close the window. When the loaded spring deteriorates due to fatigue, it will be difficult to push the window panel up.

A conventional waterproof rubber seal is a device for preventing water from penetrating into the pickup bed. This device receives water from a water drainage and trough around the rear door panel and discharge the water out of the pickup bed. However, said convention device cannot function properly when being used in some conditions, such as under heavy raining or under high pressure water during car washing, in which water can penetrate through connecting points of the edge backing rubbers if the attachment of the edge backing rubbers are not good enough.

### SUMMARY OF THE INVENTION

An objective of the present invention is to provide a device for installing the roof of an automobile pickup bed with safety and maximum utilization. The invention is defined in the accompanying claims.

### BRIEF DESCRIPTION OF THE DRAWINGS

Fig. 1 shows a roof of an automobile pickup bed 100 installed to an automobile pick up bed 1.
Fig. 2 shows the automobile pickup bed 1.
Fig. 3 shows a backing panel 102 of a pickup bed roof fixing unit 101.
Fig. 4 shows an engagement view of the pickup bed roof fixing unit 101.
Fig. 5 shows another engagement view of the pickup bed roof fixing unit 101.

### DETAILED DESCRIPTION

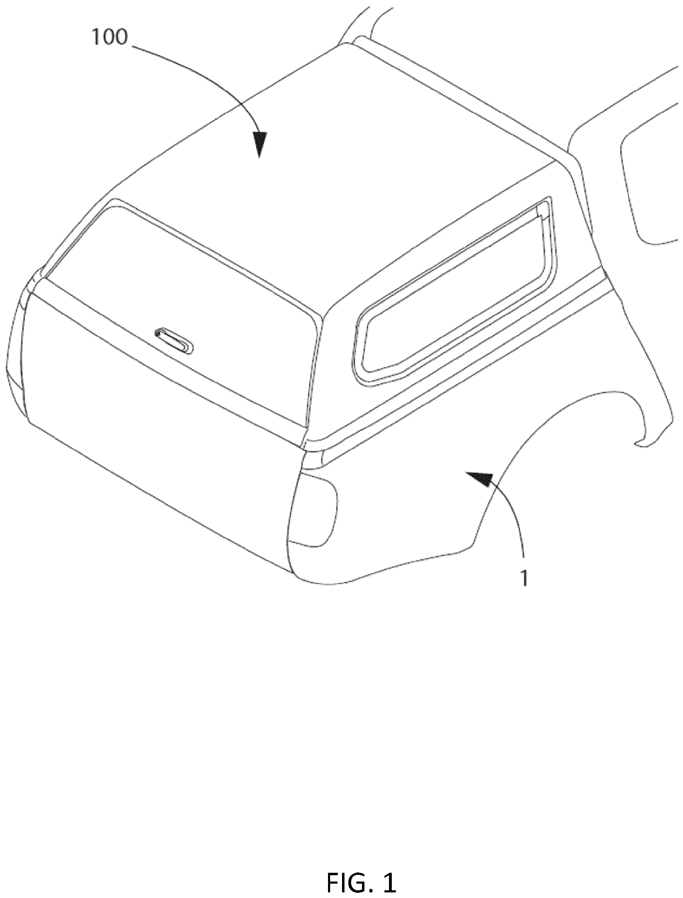

Fig. 1 shows an automobile pickup bed roof 100 installed to an automobile pickup bed 1. The automobile pickup bed roof 100 covers the automobile pickup bed 1, safeguarding personal belongings or goods carried on the pickup bed against being damage by the weather or being stolen.

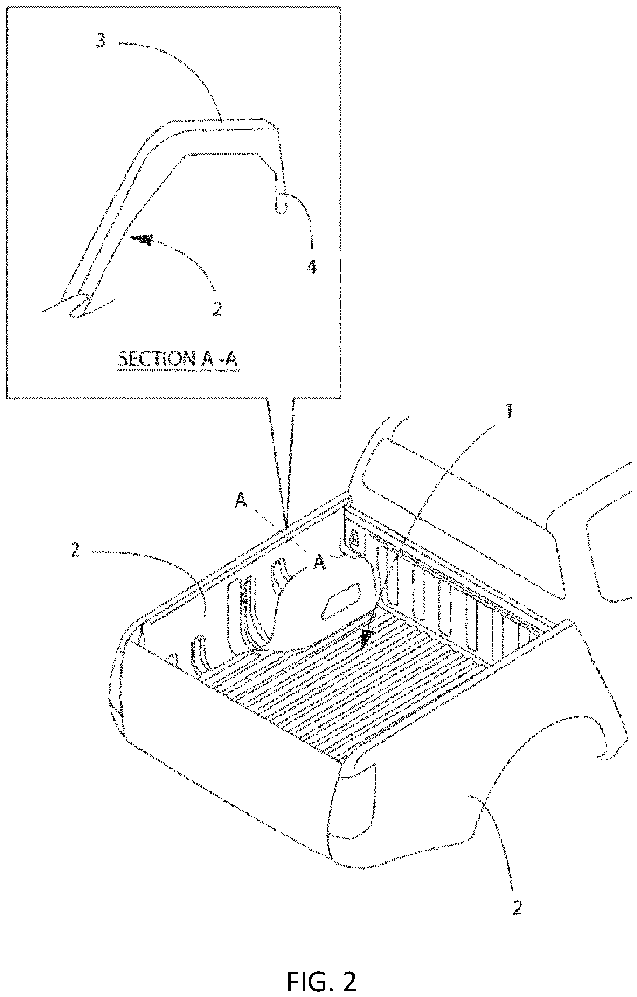

Fig. 2 shows the automobile pickup bed 1 onto which the automobile pickup bed roof 100 is fixed. The automobile pickup bed 1 comprises two side walls 2 opposed to each other, i.e. a left side wall and a right side wall, to which the automobile pickup bed roof 100 will be attached. An upper edge 3 of each of the side walls 2 includes an end part 4 pendent downwards and towards the inner of the pickup bed body. This is the part that is clamped to the automobile pickup bed roof 100.

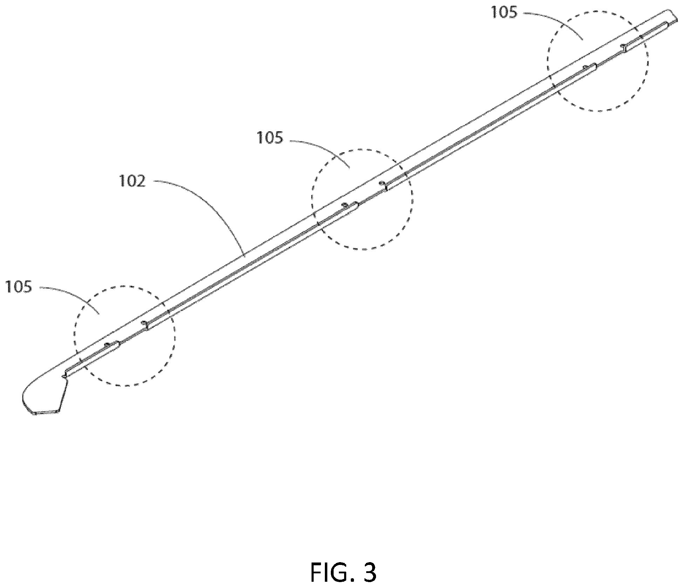

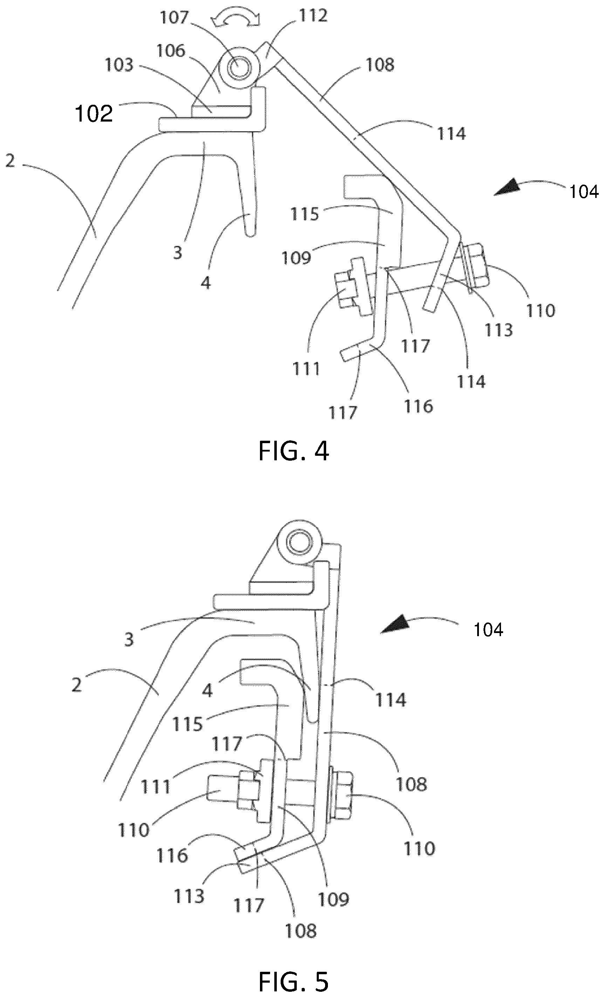

Fig. 3 to Fig. 5 show the automobile pickup bed roof 100 equipped with a pickup bed roof fixing unit 101 that is clamped and attached to the upper edge 3 of the side wall 2 in order to attach the automobile pickup bed roof 100 to the automobile pickup bed 1. The pickup bed roof fixing unit 101 comprises a backing panel 102, a crank base 103, and a fixing unit 104.

Fig. 3 shows the backing panel 102 which is in the form of a strip with one longitudinal edge folded upright as a high rise edge. The backing panel 102 is to be laid over the upper edge 3 of the side wall 2. The backing panel 102 is a base portion of the automobile pickup bed roof 100 when mounted on the upper edge 3 of the side wall 2 and attaches the automobile pickup bed roof 100 to the automobile pickup bed 1. The backing panel 102 has a part that supports attachment to the crank base 103. An attaching part 105 is in the form of a flat plate. At one edge of the attaching part 105 is a concave part which is cut out of the high raised edge of the backing panel 102 which is used to attach to the fixing unit 104 in order to make the fixing unit 104 attached to the end part 4 of the side wall 2 securely.

The crank base 103 is in the form of a flat panel having a base portion that lays over and attaches to the attaching part 105 of the backing panel 102. The crank base 103 comprises two extending arms 106 extending up from the base portion. The extending arm 106 has a hole which is inserted by a rotating pin 107 which goes through and pivotally connects the fixing unit 104 to the crank base 103.

The fixing unit 104 is engaged with the end part 4 which is pendent from the upper edge 3 of the side wall 2 in such a way that the automobile pickup bed roof 100 is attached to the automobile pickup bed 1 securely. The fixing unit 104 comprises a clamping arm 108, an engaging member 109, a thread stud 110 and a locking nut 111.

The clamping arm 108 is in the form of a plate which is in close contact with the end part 4 at the upper edge 3 of the pickup bed. At one end of the clamping arm 108 there is a protruding part 112 with two legs. Each one of the two legs has a hole opposite to each other. The rotating pin 107 is inserted into the two holes of the protruding part so that the clamping arm 108 is pivotally coupled to the crank base 103. At the other end of the clamping arm 108, there is a sliding base 113, extending therefrom and being angled at a certain degree with respect to longitudinal axis of the clamping arm 108. The sliding base 113 functions as a base for movement of the engaging member 109 which can be moved toward and clamps the end part 4. The clamping arm 108 has an elongated slot 114 near its other end. The elongated slot is used for inserting the thread stud 110 in order to fasten it with the locking nut 111 in order to displace the engaging member 109 toward the clamping arm 108 and clamp the end part 4 therebetween.

The engaging member 109 is in the form of a plate that can move toward the clamping arm 108 in order to clamp the end part 4 of the upper edge 3 therebetween. The engaging member 109 is provided with a clamping part 115 at one of its ends. The clamping part 115 is used for clamping the end part 4. At the other end of the engaging member 109, there is a base 116 that is in close contact with and joined to the engaging member 109. The base 116 is angled at a certain degree corresponding to that of the sliding base 113 of the clamping arm 108, such that the base 116 of the engaging member 109 can slide along the sliding base 113 of the clamping arm 108 thereby clamping the end part 4. The engaging member 109 has a longitudinal groove 117 running along its length which is used for inserting the thread stud 110. When the thread stud 110 is fastened with the locking nut 111, the engaging member 109 is moved toward the clamping arm 108 and thereby clamps the end part 4 at the upper edge of 3.

The thread stud 110 is in the form of a thread bar which is used for inserting into the elongated slot 114 of the clamping arm 108 and the groove 117 of the engaging member 109 and tighten to the locking nut 111 in order to enable the engaging member 109 to slide to the clamping arm 108 and clamp to the end part 4 at the upper edge 3.

The locking nut 111 may be in the form of a flat piece having a hole and is used for being inserted by and fastened with the thread stud 110. During fastening by the thread stud 110, the locking nut 111 will rotate following the rotation of the thread stud 110. While the locking nut 111 rotates, one end of the locking nut 111 will rotate accordingly and interlock with the base 116 of the engaging member 109 that is angled with a certain degree with respect to the engaging member 109. By this way, further rotation of the locking nut 111 is restricted, and it will no longer rotate with the thread stud 110. Thereby, the thread stud 110 is fastened to the locking nut 111 and makes the engaging member 109 move toward the clamping arm 108 and finally clamp the end part 4 at the upper edge 3 of the side wall 2 securely.

### BEST MODE FOR CARRYING OUT THE INVENTION

As stated above in the detailed description of this application.

## Claims

1. An automobile pickup bed roof (100) installed on an automobile pickup bed (1) comprising a pickup bed roof fixing unit attached to an upper edge (3) of a side wall (2) of the automobile pickup bed (1) in order to attach the automobile pickup bed roof (100) to the automobile pickup bed (1), the pickup bed roof fixing unit comprising a backing panel (102), a crank base (103) and a fixing unit (104),
the backing panel (102) being laid over the upper edge (3) of the side wall (2), the backing panel (102) having a part that supports attachment to the crank base (103), an attaching part (105) is in the form of a flat plate, at one edge of the attaching part (105) is a concave part which is cut out of a high raised edge of the backing panel (102) which is used to attach to the fixing unit (104) in order to make the fixing unit (104) attached to an end part (4) of the side wall (2);
the crank base (103) is attached to the attaching part (105) of the backing panel (102), the crank base (103) comprising two extending arms (106) extending up from a base portion, the extending arms (106) have a hole which is inserted by a rotating pin (107) which goes through and pivotally connects the fixing unit (104) to the crank base (103);
the fixing unit (104) is engaged with the end part (4), which is pendent from the upper edge (3) of the side wall (2) in such a way that the automobile pickup bed roof (100) is attached to the automobile pickup bed (1), wherein the fixing unit (104) comprises a clamping arm (108), an engaging member (109), a thread stud (110) and a locking nut (111);
the clamping arm (108) is in close contact with the end part (4) at the upper edge (3), wherein at one end of the clamping arm (108), there is a protruding part (112) with two legs, each one of the two legs has a hole opposite to each other, the rotating pin (107) is inserted into the two holes of the protruding part (112) so that the clamping arm (108) is pivotally coupled to the crank base (103), at the other end of the clamping arm (108), there is a sliding base (113), extending therefrom and being angled at a certain degree with respect to longitudinal axis of the clamping arm (108), the sliding base (113) functions as a base for movement of the engaging member (109) which can be moved toward and clamps the end part (4), the clamping arm (108) has an elongated slot (114) near its other end, the elongated slot is used for inserting the thread stud (110) in order to fasten it with the locking nut (111) in order to displace the engaging member (109) toward the clamping arm (108) and clamp the end part (4) therebetween;
the engaging member (109) is in the form of a plate that can move toward the clamping arm (108) in order to clamp to the end part (4) at the upper edge (3) therebetween, wherein the engaging member (109) is provided with a clamping part (115) at one of its ends, the clamping part (115) is used for clamping the end part (4), the engaging member (109) has a longitudinal groove (117) running along its length which is used for inserting the thread stud (110) in order to be fastened with the locking nut (111), the engaging member (109) is moved toward the clamping arm (108) and thereby clamping the end part (4) at the upper edge (3);
the thread stud (110) is in the form of a thread bar used for inserting into the elongated slot (114) of the clamping arm (108) and the groove (117) of the engaging member (109) and tighten to the locking nut (111) in order to enable the engaging member (109) to slide to the clamping arm (108) and clamp to the end part (4) at the upper edge (3);
the locking nut (111) is used for being inserted by and fastened with the thread stud (110).

2. The automobile pickup bed roof (100) according to claim 1, wherein the clamping arm (108) and the engaging member (109) having a part that mates and slides toward each other, the clamping arm (108) having a sliding base (113), the sliding base (113) is used as a base for movement of the engaging member (109) which can be moved toward and clamps the end part (4) and the engaging member (109) having a base (116) that can slide along the sliding base (113) of the clamping arm (108) in order to be fastened to thereby clamp the end part (4).

3. The automobile pickup bed roof (100) according to claim 2, wherein the locking nut (111) is used for being inserted by and fastened with the thread stud (110), wherein during fastened by the thread stud (110), the locking nut (111) will rotate following the rotation of the thread stud (110), while the locking nut (111) rotates, one end of the locking nut (111) will rotate accordingly and interlock with the base (116) of the engaging member (109) that is angled with a certain degree with respect to the engaging member (109), by this way, further rotation of the locking nut (111) will no longer rotate with the thread stud (110), thereby, the thread stud (110) is fastened to the locking nut (111) making the engaging member (109) move toward the clamping arm (108) to clamp the end part (4) at the upper edge (3) of the side wall (2).

## Patentansprüche

1. Ein Ladeflächendach (100) für ein Pick-up-Kraftfahrzeug, installiert auf einer Ladefläche (1) für ein Pick-up-Kraftfahrzeug, umfassend eine an einer oberen Kante (3) einer Seitenwand (2) der Ladefläche (1) für das Pick-up-Kraftfahrzeug angebrachte Ladeflächendach-Befestigungseinheit zum Anbringen des Ladeflächendachs (100) für das Pick-up-Kraftfahrzeug an der Ladefläche (1) für das Pick-up-Kraftfahrzeug, die Ladeflächendach-Befestigungseinheit umfassend eine Hinterlegplatte (102), eine Kurbelbasis (103) und eine Befestigungseinheit (104),
wobei die Hinterlegplatte (102) über die obere Kante (3) der Seitenwand (2) gelegt ist, die Hinterlegplatte (102) einen Abschnitt aufweist, der die Befestigung an der Kurbelbasis (103) unterstützt, ein Anbringungsabschnitt (105) die Form einer flachen Platte aufweist, an einer Kante des Anbringungsabschnitts (105) ein konkaver Abschnitt vorhanden ist, der aus einer hochgezogenen Kante der Hinterlegplatte (102) ausgeschnitten ist, welche zum Anbringen an der Befestigungseinheit (104) verwendet wird, um die Befestigungseinheit (104) an einem Endabschnitt (4) der Seitenwand (2) anzubringen;
wobei die Kurbelbasis (103) am Anbringungsabschnitt (105) der Hinterlegplatte (102) angebracht ist,
die Kurbelbasis (103) umfassend zwei sich von einem Basisabschnitt nach oben erstreckende Arme (106), wobei die sich erstreckenden Arme (106) ein Loch aufweisen, in welches ein Drehstift (107) eingesetzt ist, welcher hindurchgeht und die Befestigungseinheit (104) schwenkbar mit der Kurbelbasis (103) verbindet;
wobei die Befestigungseinheit (104) in Eingriff mit dem Endabschnitt (4) steht, welcher von der oberen Kante (3) der Seitenwand (2) herabhängt, derart, dass das Ladeflächendach (100) für das Pick-up-Kraftfahrzeug an der Ladefläche (1) für das Pick-up-Kraftfahrzeug angebracht ist, wobei die Befestigungseinheit (104) einen Klemmarm (108), ein Eingriffselement (109), einen Gewindebolzen (110) und eine Sicherungsmutter (111) umfasst;
wobei der Klemmarm (108) in engem Kontakt mit dem Endabschnitt (4) an der oberen Kante (3) steht, wobei sich an einem Ende des Klemmarms (108) ein Vorsprungsabschnitt (112) mit zwei Schenkeln befindet, jeder der beiden Schenkel ein dem jeweils anderen gegenüberliegendes Loch aufweist, der Drehstift (107) in die beiden Löcher des Vorsprungsabschnitts (112) eingesetzt ist, sodass der Klemmarm (108) schwenkbar mit der Kurbelbasis (103) gekoppelt ist, sich an dem anderen Ende des Klemmarms (108) eine Gleitbasis (113) befindet, die sich von dort erstreckt und in einem bestimmten Winkel in Bezug auf die Längsachse des Klemmarms (108) abgewinkelt ist, die Gleitbasis (113) als Basis für die Bewegung des Eingriffselements (109) dient, welches darauf zu bewegt werden kann und den Endabschnitt (4) festklemmt, wobei der Klemmarm (108) ein Langloch (114) nahe seinem anderen Ende aufweist, das Langloch zum Einsetzen des Gewindebolzens (110) verwendet wird, um diesen mit der Sicherungsmutter (111) zu befestigen, um das Eingriffselement (109) zum Klemmarm (108) hin zu verlagern und den Endabschnitt (4) dazwischen festzuklemmen;
wobei das Eingriffselement (109) die Form einer Platte aufweist, die sich zum Klemmarm (108) hin bewegen kann, um den Endabschnitt (4) an der oberen Kante (3) dazwischen festzuklemmen, wobei das Eingriffselement (109) an einem seiner Enden mit einem Klemmabschnitt (115) versehen ist, der Klemmabschnitt (115) zum Festklemmen des Endabschnitts (4) verwendet wird, das Eingriffselement (109) eine entlang seiner Länge verlaufende Längsnut (117) aufweist, die zum Einsetzen des Gewindebolzens (110) verwendet wird, um mit der Sicherungsmutter (111) befestigt zu werden, wobei das Eingriffselement (109) zum Klemmarm (108) hin bewegt wird und dadurch den Endabschnitt (4) an der oberen Kante (3) festklemmt;
wobei der Gewindebolzen (110) die Form einer Gewindestange aufweist, die zum Einsetzen in das Langloch (114) des Klemmarms (108) und die Nut (117) des Eingriffselements (109) und zum Festziehen mit der Sicherungsmutter (111) verwendet wird, um dem Eingriffselement (109) zu ermöglichen, zum Klemmarm (108) hin zu gleiten und den Endabschnitt (4) an der oberen Kante (3) festzuklemmen;
wobei die Sicherungsmutter (111) dazu dient, vom Gewindebolzen (110) durchsetzt und mit diesem befestigt zu werden.

2. Das Ladeflächendach (100) für ein Pick-up-Kraftfahrzeug gemäß Anspruch 1, wobei der Klemmarm (108) und das Eingriffselement (109) einen Abschnitt aufweisen, der miteinander zusammenpasst und aufeinander zu gleitet, der Klemmarm (108) eine Gleitbasis (113) aufweist, die Gleitbasis (113) verwendet wird als Basis für die Bewegung des Eingriffselements (109), welches darauf zu bewegt werden kann und den Endabschnitt (4) festklemmt, und wobei das Eingriffselement (109) eine Basis (116) aufweist, die entlang der Gleitbasis (113) des Klemmarms (108) gleiten kann, um befestigt zu werden und dadurch den Endabschnitt (4) festzuklemmen.

3. Das Ladeflächendach (100) für ein Pick-up-Kraftfahrzeug gemäß Anspruch 2, wobei die Sicherungsmutter (111) dazu dient, vom Gewindebolzen (110) durchsetzt und mit diesem befestigt zu werden, wobei während des Befestigtwerdens durch den Gewindebolzen (110) die Sicherungsmutter (111) entsprechend der Drehung des Gewindebolzens (110) rotieren wird, während die Sicherungsmutter (111) rotiert, ein Ende der Sicherungsmutter (111) dementsprechend rotieren wird und mit der Basis (116) des Eingriffselements (109) ineinandergreifen wird, welche in einem bestimmten Winkel in Bezug auf das Eingriffselement (109) abgewinkelt ist, wobei auf diese Weise eine weitere Drehung der Sicherungsmutter (111) nicht mehr mit dem Gewindebolzen (110) rotieren wird, dadurch der Gewindebolzen (110) an der Sicherungsmutter (111) befestigt wird, wodurch sich das Eingriffselement (109) zum Klemmarm (108) hin bewegt, um den Endabschnitt (4) an der oberen Kante (3) der Seitenwand (2) festzuklemmen.

## Revendications

1. Un toit de benne de véhicule pick-up (100) installé sur une benne de véhicule pick-up (1) comprenant une unité de fixation de toit de benne fixée à un bord supérieur (3) d'une paroi latérale (2) de la benne de véhicule pick-up (1) afin de fixer le toit de benne de véhicule pick-up (100) à la benne de véhicule pick-up (1), l'unité de fixation de toit de benne comprenant un panneau d'appui (102), une base de manivelle (103) et une unité de fixation (104),
le panneau d'appui (102) étant disposé par-dessus le bord supérieur (3) de la paroi latérale (2), le panneau d'appui (102) ayant une partie qui supporte la fixation à la base de manivelle (103), une partie de fixation (105) est sous la forme d'une plaque plate, à un bord de la partie de fixation (105) se trouve une partie concave qui est découpée dans un bord fortement relevé du panneau d'appui (102) qui est utilisé pour la fixation à l'unité de fixation (104) afin de fixer l'unité de fixation (104) à une partie d'extrémité (4) de la paroi latérale (2);
la base de manivelle (103) est fixée à la partie de fixation (105) du panneau d'appui (102), la base de manivelle (103) comprenant deux bras d'extension (106) s'étendant vers le haut à partir d'une partie de base, les bras d'extension (106) ont un trou dans lequel est insérée une broche rotative (107) qui passe à travers et relie de manière pivotante l'unité de fixation (104) à la base de manivelle (103);
l'unité de fixation (104) est en prise avec la partie d'extrémité (4), qui est pendante depuis le bord supérieur (3) de la paroi latérale (2) de telle sorte que le toit de benne de véhicule pick-up (100) est fixé à la benne de véhicule pick-up (1), dans lequel l'unité de fixation (104) comprend un bras de serrage (108), un élément d'engagement (109), un goujon fileté (110) et un écrou de blocage (111);
le bras de serrage (108) est en contact étroit avec la partie d'extrémité (4) au niveau du bord supérieur (3), dans lequel à une extrémité du bras de serrage (108), se trouve une partie saillante (112) avec deux branches, chacune des deux branches a un trou opposé à l'autre, la broche rotative (107) est insérée dans les deux trous de la partie saillante (112) de sorte que le bras de serrage (108) est couplé de manière pivotante à la base de manivelle (103), à l'autre extrémité du bras de serrage (108), se trouve une base coulissante (113), s'étendant à partir de cette extrémité et étant inclinée selon un certain angle par rapport à l'axe longitudinal du bras de serrage (108), la base coulissante (113) sert de base pour le déplacement de l'élément d'engagement (109) qui peut être déplacé vers et serre la partie d'extrémité (4), le bras de serrage (108) a une fente allongée (114) près de son autre extrémité, la fente allongée est utilisée pour insérer le goujon fileté (110) afin de le fixer avec l'écrou de blocage (111) afin de déplacer l'élément d'engagement (109) vers le bras de serrage (108) et de serrer la partie d'extrémité (4) entre ceux-ci;
l'élément d'engagement (109) est sous la forme d'une plaque qui peut se déplacer vers le bras de serrage (108) afin de serrer la partie d'extrémité (4) au niveau du bord supérieur (3) entre ceux-ci, dans lequel l'élément d'engagement (109) est pourvu d'une partie de serrage (115) à l'une de ses extrémités, la partie de serrage (115) est utilisée pour serrer la partie d'extrémité (4), l'élément d'engagement (109) a une rainure longitudinale (117) s'étendant le long de sa longueur qui est utilisée pour insérer le goujon fileté (110) afin d'être fixé avec l'écrou de blocage (111), l'élément d'engagement (109) est déplacé vers le bras de serrage (108) et serre ainsi la partie d'extrémité (4) au niveau du bord supérieur (3);
le goujon fileté (110) est sous la forme d'une barre filetée utilisée pour être insérée dans la fente allongée (114) du bras de serrage (108) et la rainure (117) de l'élément d'engagement (109) et serrée avec l'écrou de blocage (111) afin de permettre à l'élément d'engagement (109) de coulisser vers le bras de serrage (108) et de serrer la partie d'extrémité (4) au niveau du bord supérieur (3);
l'écrou de blocage (111) est utilisé pour être traversé par le goujon fileté (110) et fixé avec celui-ci.

2. Le toit de benne de véhicule pick-up (100) selon la revendication 1, dans lequel le bras de serrage (108) et l'élément d'engagement (109) ont une partie qui s'accouple et coulisse l'une vers l'autre, le bras de serrage (108) ayant une base coulissante (113), la base coulissante (113) est utilisée comme base pour le déplacement de l'élément d'engagement (109) qui peut être déplacé vers et serre la partie d'extrémité (4) et l'élément d'engagement (109) ayant une base (116) qui peut coulisser le long de la base coulissante (113) du bras de serrage (108) afin d'être fixée pour serrer ainsi la partie d'extrémité (4).

3. Le toit de benne de véhicule pick-up (100) selon la revendication 2, dans lequel l'écrou de blocage (111) est utilisé pour être traversé par le goujon fileté (110) et fixé avec celui-ci, dans lequel pendant la fixation par le goujon fileté (110), l'écrou de blocage (111) tournera en suivant la rotation du goujon fileté (110), tandis que l'écrou de blocage (111) tourne, une extrémité de l'écrou de blocage (111) tournera en conséquence et s'enclenchera avec la base (116) de l'élément d'engagement (109) qui est inclinée selon un certain angle par rapport à l'élément d'engagement (109), de cette manière, une rotation supplémentaire de l'écrou de blocage (111) ne tournera plus avec le goujon fileté (110), ainsi, le goujon fileté (110) est fixé à l'écrou de blocage (111) faisant se déplacer l'élément d'engagement (109) vers le bras de serrage (108) pour serrer la partie d'extrémité (4) au niveau du bord supérieur (3) de la paroi latérale (2).
